# EUROPEAN PATENT APPLICATION

(11) **EP 4 712 463 A1**
(43) Date of publication of application: **18.03.2026**
(21) Application number: 24802748.4
(22) Date of filing: 22.04.2024
(51) Int. Cl.: H04N 13/243, G06T 17/00

(54) **IMAGE PROCESSING METHOD, APPARATUS AND SYSTEM**

(30) Priority: 11.05.2023 CN 202310532786
(71) Applicant: Beijing Wodong Tianjun Information Technology Co., Ltd., Beijing 100176 (CN); Beijing Jingdong Century Trading Co., Ltd., Beijing 100176 (CN)
(72) Inventor: GUO, Jinghao, Beijing 100176 (CN); ZHANG, Xiajie, Beijing 100176 (CN); LIU, Chang, Beijing 100176 (CN); WEI, Wei, Beijing 100176 (CN); DU, Feng, Beijing 100176 (CN); LIU, Luying, Beijing 100176 (CN); BAI, Guoxing, Beijing 100176 (CN); LIU, Weitian, Beijing 100176 (CN)
(74) Representative: Page White Farrer
(86) International application number: PCT/CN2024/089111
(87) International publication number: WO 2024/230463

(57) **Abstract**

The present disclosure relates to an image processing method, apparatus and system, and relates to the technical field of image processing. The image processing method comprises: according to a position of an article undergoing acquisition, determining a three-dimensional area, the whole or part of said article being located within the three-dimensional area; providing on the surface of the three-dimensional area a plurality of image acquisition positions; and at each image acquisition position, using an image acquisition apparatus to acquire a first image of said article in a viewing angle at the image acquisition position, so as to obtain a plurality of first images of said article at different viewing angles, so as to help an image display apparatus to display, according to the plurality of first images, an image corresponding to a selected viewing angle.

## Description

### CROSS-REFERENCE TO RELATED APPLICATIONS

The present application is based on and claims the priority to the Chinese application No. 202310532786.0 filed on May 11, 2023, the disclosure of which is hereby incorporated by reference in its entirety into the present application.

### TECHNICAL FIELD

The present disclosure relates to the technical field of image processing, and in particular, to an image processing method, image processing apparatus, image processing system, and non-transitory computer-readable storage medium.

### BACKGROUND

With the development of Augmented Reality (AR) and Virtual Reality (VR) technologies, browsing demands for online information are no longer limited to two-dimensional planar information, but more stereoscopic and realistic three-dimensional information. Therefore, there are growing demands for three-dimensional information presentation on an article.

In the related art, the three-dimensional information presentation relies mainly on three-dimensional reconstruction technology, i.e., presenting three-dimensional information of an article by constructing a three-dimensional model of the article.

### SUMMARY

According to some embodiments of the present disclosure, there is provided an image processing method on an image capturing side, including: according to a position of a captured article, determining a three-dimensional area, a whole or a part of the captured article being located inside the three-dimensional area; arranging, on a surface of the three-dimensional area, a plurality of image capturing positions; and at the each image capturing position, capturing a first image of the captured article at a viewing angle for each image capturing position of the plurality of image capturing positions by using an image capturing apparatus, to obtain a plurality of first images of the captured article at different viewing angles, and cause that an image display apparatus displays, according to the plurality of first images, an image corresponding to a selected viewing angle.

In some embodiments, a distance between the each image capturing position of the plurality of image capturing positions and the captured article is equal.

In some embodiments, the three-dimensional area includes a hemispherical area, and the captured article includes a center of a bottom of the hemispherical area.

In some embodiments, the arranging, on a surface of the three-dimensional area, a plurality of image capturing positions includes: arranging one image capturing position every preset longitude or preset latitude, by taking an initial position of the image capturing apparatus as a starting point.

In some embodiments, the arranging, on a surface of the three-dimensional area, a plurality of image capturing positions includes: arranging one image capturing position every preset distance, by taking an initial position of the image capturing apparatus as a starting point.

In some embodiments, the image processing method further includes: determining a pose of the image capturing apparatus when capturing the first image at the each image capturing position as a first pose; adjusting the first pose to determine a second pose of the image capturing apparatus at the each image capturing position, the second pose causing that a y-axis of a body coordinate system of the image capturing apparatus at the each image capturing position points to a same point in a direction away from a bottom of the three-dimensional area, and a z-axis points to the captured article; and performing a perspective transformation on the first image according to the first pose and the second pose to determine a second image, to cause that an image corresponding to the selected viewing angle is displayed on the image display apparatus according to the second image.

In some embodiments, the image processing method further includes: providing related information of the plurality of first images to the image display apparatus, to cause that the image display apparatus generates an image to be displayed according to related information of a first image for a designated image capturing position and related information of a first image for an adjacent image capturing position of the designated image capturing position, the designated image capturing position being determined according to the selected viewing angle.

In some embodiments, the capturing a first image of the captured article at a viewing angle for each image capturing position of the plurality of image capturing positions includes: capturing the plurality of first images at the plurality of image capturing positions according to a rendering identification, the rendering identification being kept on a same plane as the captured article by a plane recognition processing.

According to other embodiments of the present disclosure, there is provided an image processing method on an image display side, including: obtaining a viewing angle selected by a user; and displaying an image corresponding to the selected viewing angle according to a plurality of first images of a captured article corresponding to different viewing angles captured at a plurality of image capturing positions, the plurality of image capturing positions being located on a surface of a three-dimensional area, the three-dimensional area being determined according to a position of the captured article, and a whole or a part of the captured article being located inside the three-dimensional area.

In some embodiments, the displaying an image corresponding to the selected viewing angle includes: generating an image to be displayed according to related information of a first image for a designated image capturing position and related information of a first image for an adjacent image capturing position of the designated image capturing position, the designated image capturing position being determined according to the selected viewing angle.

According to still other embodiments of the present disclosure, there is provided an image processing system, including: an image capturing apparatus configured to perform the image processing method on the image capturing side in any of the above embodiments; and an image display apparatus configured to, according to a plurality of first images provided by a first processing apparatus, perform the image processing method on the image display side in any of the above embodiments.

In some embodiments, the image processing system further includes: a server apparatus configured to receive the plurality of first images uploaded by the image capturing apparatus and send related information of the plurality of first images to the image display apparatus.

In some embodiments, the server apparatus sends a second image to the image display apparatus; and the image display apparatus displays, according to the second image, an image corresponding to a selected viewing angle.

According to further embodiments of the present disclosure, there is provided an image processing apparatus, including: a determination unit configured to, according to a position of a captured article, determine a three-dimensional area, a whole or a part of the captured article being located inside the three-dimensional area; an arrangement unit configured to arrange, on a surface of the three-dimensional area, a plurality of image capturing positions; and an capturing unit configured to, at the each image capturing position, capture a first image of the captured article at a viewing angle for each image capturing position of the plurality of image capturing positions by using an image capturing apparatus, to obtain a plurality of first images of the captured article at different viewing angles, and cause that an image display apparatus displays, according to the plurality of first images, an image corresponding to a selected viewing angle.

In some embodiments, a distance between the each image capturing position of the plurality of image capturing positions and the captured article is equal.

In some embodiments, the three-dimensional area includes a hemispherical area, and the captured article includes a center of a bottom of the hemispherical area.

In some embodiments, the arrangement unit arranges one image capturing position every preset longitude or preset latitude, by taking an initial position of the image capturing apparatus as a starting point.

In some embodiments, the arrangement unit arranges one image capturing position every preset distance, by taking the initial position of the image capturing apparatus as the starting point.

In some embodiments, the determination unit determines a pose of the image capturing apparatus when capturing the first image at the each image capturing position as a first pose; adjusts the first pose to determine a second pose of the image capturing apparatus at the each image capturing position, the second pose causing that a y-axis of a body coordinate system of the image capturing apparatus at the each image capturing position points to a same point in a direction away from a bottom of the three-dimensional area, and a z-axis points to the captured article; and performs a perspective transformation on the first image according to the first pose and the second pose to determine a second image, to cause that an image corresponding to the selected viewing angle is displayed on the image display apparatus according to the second image.

In some embodiments, the image processing apparatus further includes: a sending unit configured to provide related information of the plurality of first images to the image display apparatus, to cause that the image display apparatus generates an image to be displayed according to related information of a first image for a designated image capturing position and related information of a first image for an adjacent image capturing position of the designated image capturing position, the designated image capturing position being determined according to the selected viewing angle.

In some embodiments, the capturing unit captures the plurality of first images at the plurality of image capturing positions according to a rendering identification, the rendering identification being kept on a same plane as the captured article by a plane recognition processing.

According to further embodiments of the present disclosure, there is provided an image processing apparatus, including: an obtaining unit configured to obtain a viewing angle selected by a user; and a display unit configured to display an image corresponding to the selected viewing angle according to a plurality of first images of a captured article corresponding to different viewing angles captured at a plurality of image capturing positions, the plurality of image capturing positions being located on a surface of a three-dimensional area, the three-dimensional area being determined according to a position of the captured article, and a whole or a part of the captured article being located inside the three-dimensional area.

In some embodiments, the display unit generates an image to be displayed according to related information of a first image for a designated image capturing position and related information of a first image for an adjacent image capturing position of the designated image capturing position, the designated image capturing position being determined according to the selected viewing angle.

According to still other embodiments of the present disclosure, there is provided an image processing apparatus, including: a memory; and a processor coupled to the memory, the processor being configured to perform, based on instructions stored in the memory device, the image processing method in any of the above embodiments.

According to further embodiments of the present disclosure, there is provided a non-transitory computer-readable storage medium having thereon stored a computer program which, when executed by a processor, implements the image processing method in any of the above embodiments.

According to further embodiments of the present disclosure, there is provided a computer program, including: instructions which, when executed by a processor, cause the processor to perform the image processing method in any of the above embodiments.

### BRIEF DESCRIPTION OF THE DRAWINGS

The accompanying drawings, which constitute a part of this specification, illustrate embodiments of the present disclosure and together with the description, serve to explain the principles of the present disclosure.

The present disclosure may be more clearly understood according to the following detailed description by referring to the accompanying drawings, in which:
Fig. 1 illustrates a flow diagram of an image processing method according to some embodiments of the present disclosure;
Figs. 2a-2b illustrate schematic diagrams of arrangement of image capturing positions according to some embodiments of the present disclosure;
Figs. 3a-3b illustrate schematic diagrams of arrangement of image capturing positions according to other embodiments of the present disclosure;
Figs. 4a-4b illustrate schematic diagrams of pose adjustment according to some embodiments of the present disclosure;
Figs. 5a-5c illustrate schematic diagrams of three-dimensional information presentation according to some embodiments of the present disclosure;
Fig. 6 illustrates a schematic diagram of an image processing system according to some embodiments of the present disclosure;
Fig. 7 illustrates a block diagram of an image processing system according to some embodiments the present disclosure;
Figs. 8a-8d illustrate block diagrams of an image processing apparatus according to some embodiments of the present disclosure.

### DETAILED DESCRIPTION

Various exemplary embodiments of the present disclosure will now be described in detail with reference to the accompanying drawings. It should be noted that: the relative arrangement of components and steps, numerical expressions and numerical values set forth in these embodiments do not limit the scope of the present disclosure unless specifically stated otherwise.

Meanwhile, it should be understood that the sizes of the parts shown in the drawings are not drawn to an actual scale for ease of the description.

The following description of at least one exemplary embodiment is merely illustrative in nature and is in no way used as any limitation on this disclosure and its application or use.

Techniques, methods, and devices known to one of ordinary skill in the related art may not be discussed in detail, but are intended to be part of the description where appropriate.

In all examples shown and discussed herein, any specific value should be construed as exemplary only and not as limiting. Thus, other examples of the exemplary embodiments may have different values.

It should be noted that: similar reference numbers and letters refer to similar items in the following figures, and thus, once an item is defined in one figure, it need not be discussed further in subsequent figures.

The inventors of the present disclosure have found that in the related art described above, there are the following problems: three-dimensional modeling of an object needing a high-end capturing device, a high-quality photographing environment, a long reconstruction period, and high manual post-processing costs, resulting in high costs for three-dimensional information presentation of an image.

In view of this, the present disclosure provides an image processing technical solution, by which the costs for three-dimensional information presentation of an image can be reduced.

As mentioned above, three-dimensional modeling of an article requires a high-end capturing device, a high-quality photographing environment, a long reconstruction period, and high manual post-processing costs; moreover, the three-dimensional modeling has the potential for reconstruction failures for some highly reflective, transparent, and less textured articles. Therefore, the three-dimensional reconstruction technology has high costs, and cannot meet the growing three-dimensional model demand in the market.

In a Neural radiation Fields (NeRF) solution, images of an article at different viewing angles are synthesized by implicit representation. However, in the NerF solution, there are also certain technical problems and limitations: a relatively long time consumed by training of a model in the NeRF solution, and a relatively low Peak Signal to Noise Ratio (PSNR) of the synthesized image; and especially for a 360-degree surround scene, occurrence of cloud noise in part of the synthesized images for the model in the NeRF solution, making the information presentation effect reduced, which cannot meet the demand for information presentation.

For the above technical problems, in the present disclosure, based on an capturing method for volumetric data, data is captured at a designated position by using a common image capturing apparatus (such as a mobile phone); and by processing, the captured data is transformed into images corresponding to a plurality of viewing angles, to reduce capturing costs for the data and thus reduce costs for three-dimensional information presentation.

In some embodiments, in the low-cost three-dimensional information presentation technical solution provided by the present disclosure, by fusing Simultaneous Localization and Mapping (SLAM), AR, coding and decoding and other technologies, a set of three-dimensional information presentation technical solutions from capturing, data processing to playing and presentation are constructed. In this technical solution, data is captured by using a common image capturing apparatus (such as a mobile phone); automated data management and transformation are performed on a server side; and the transformed data is downloaded on a playing side, thereby freely presenting information of an article at each viewing angle.

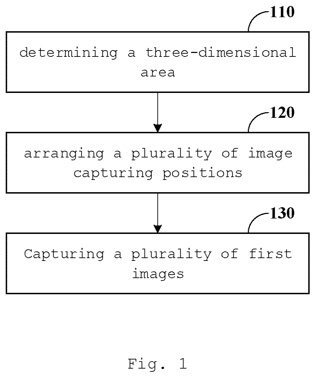

Fig. 1 illustrates a flow diagram of an image processing method according to some embodiments of the present disclosure.

As shown in Fig. 1, in step 110, according to a position of a captured article, a three-dimensional area is determined, a whole or a part of the captured article being located inside the three-dimensional area.

In some embodiments, a distance between each of a plurality of image capturing positions and the captured article is equal. For example, the three-dimensional area includes a hemispherical area (i.e., a volumetric hemisphere), and the captured article includes a center of a bottom of the hemispherical area.

For example, a center of a bounding box of the captured article coincides with the center of the bottom of the hemispherical area.

For example, a z-axis of a body coordinate system of the captured article coincides with a line connecting the center of the bottom of the volumetric hemisphere to a vertex of the volumetric hemisphere.

In some embodiments, one three-dimensional area (e.g., volumetric hemisphere) containing the captured object is determined according to a current pose of an image capturing apparatus capturing data and a size (e.g., size of the bounding box of the article) of the captured object.

In this way, it can be ensured that in image presentation, a camera position corresponding to each image is on a same hemisphere (i.e., the distance between each image capturing position and the captured article is equal), thereby solving the technical problem of poor three-dimensional information presentation effect caused by deviations in distance, rotation and etc. existing in camera poses in capturing. The providing of the three-dimensional area can ensure that the object in each finally presented image is in a basically consistent size, and ensure that final rotation for obtaining the image is distributed according to a fixed rule, thereby ensuring that the effect in three-dimensional information presentation is similar to that of a three-dimensional model.

In step 120, a plurality of image capturing positions are arranged on a surface of the three-dimensional area.

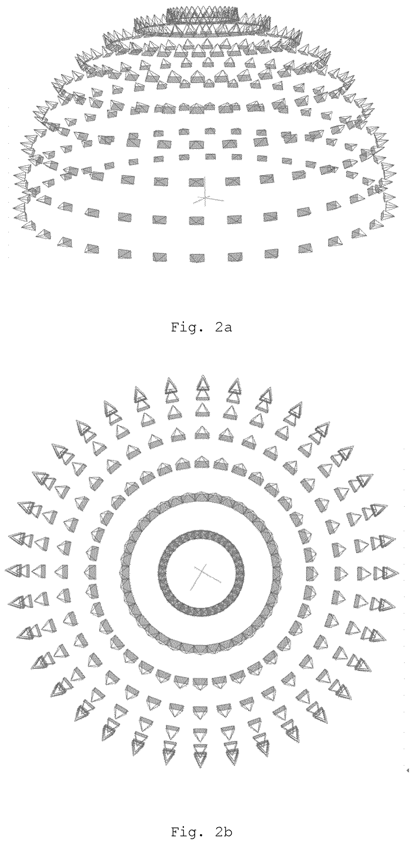

In some embodiments, one image capturing position is arranged every preset longitude or preset latitude, by taking an initial position of the image capturing apparatus as a starting point. For example, this technical solution can be implemented by embodiments in Figs. 2a-2b.

Figs. 2a-2b illustrate schematic diagrams of arrangement of image capturing positions according to some embodiments of the present disclosure.

As shown in Fig. 2a, on the volumetric hemisphere, one image capturing position is arranged every certain angle in longitude and latitude directions. Fig. 2b is a top view of Fig. 2a. In this way, the arranged image capturing position can completely cover different viewing angles, thereby improving the presentation effect of the three-dimensional information.

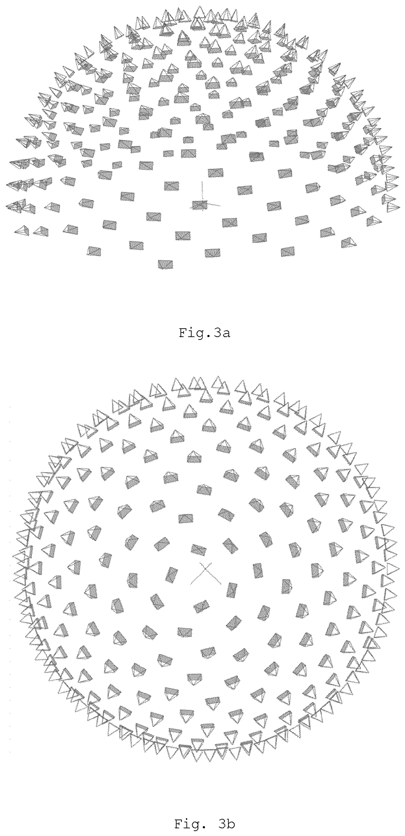

In some embodiments, one image capturing position is arranged every preset distance, by taking an initial position of the image capturing apparatus as a starting point. For example, this technical solution can be implemented by embodiments in Figs. 3a-3b.

Figs. 3a-3b illustrate schematic diagrams of other embodiments of arrangement of image capturing positions of the present disclosure.

As shown in Fig. 3a, on the volumetric hemisphere, a certain number of image capturing positions are uniformly arranged, and a distance between the image capturing positions is equal. Fig. 3b is a top view of Fig. 3a. In this way, as much data information as possible can be captured by using as few image capturing positions as possible.

In step 130, at the each image capturing position, a first image of the captured article at a viewing angle for each image capturing position of the plurality of image capturing positions is captured by the image capturing apparatus to obtain a plurality of first images of the captured article at different viewing angles, and cause that an image display apparatus displays, according to the plurality of first images, an image corresponding to a selected viewing angle.

In the above embodiments, by arranging image capturing positions on the surface of the three-dimensional area including the article, two-dimensional images of the article at different viewing angles can be captured; and by displaying a two-dimensional image corresponding to a selected viewing angle, three-dimensional information presentation of the article is implemented. In this way, costs for three-dimensional information presentation of the image can be reduced.

In some embodiments, the plurality of first images are captured at the plurality of image capturing positions according to a rendering identification, the rendering identification being kept in a same plane as the captured article by a plane recognition processing.

For example, by a rendering identification (e.g., bounding box, volumetric sphere, etc.), a user is guided to perform image capturing at a designated image capturing position. Plane recognition can be combined to ensure that the rendering identification and a shot object (captured article) are in a same plane.

For example, on an capturing side, it is possible to automatically focus according to a position of a captured object in a picture, to ensure that the shot object is clear in the picture.

For example, it is possible to automatically detect, by using the rendering identification such as a bounding box, whether the captured object exceeds a display range of the picture; on the capturing side, it is possible to calculate, according to a current pose of a camera, whether the camera approaches to a designated image capturing position; and in a case where an capturing requirement (such as the captured article not exceeding the display range, and the camera being located at the designated image capturing position) is met, on the capturing side, it is possible to automatically trigger storage for captured information to save the current captured information.

In some embodiments, after the image capturing is completed, on the capturing side, it is possible to automatically package the captured first image and the first pose corresponding to the first image, camera intrinsics, bounding box and other related information and transmit them to the server side.

For example, on the capturing side, after a real-time pose of a camera (image capturing apparatus) is obtained by using a Slam system of a mobile terminal, the pose is sent to the server side.

For example, on the server side, the data packet uploaded on the capturing side is received, and the first image is stored and managed according to a serial number of the captured article; and on the server side, the captured original data (the first image and the first pose corresponding to the first image, etc.) is analyzed.

In some embodiments, a pose of the image capturing apparatus when capturing the first image at the each image capturing position is determined as a first pose; the first pose is adjusted to determine a second pose of the image capturing apparatus at the each image capturing position, the second pose causing that a y-axis of a body coordinate system of the image capturing apparatus at the each image capturing position points to a same point in a direction away from the bottom of the three-dimensional area, and a z-axis points to the captured article; and a perspective transformation is performed on the first image according to the first pose and the second pose to determine a second image, to cause that an image corresponding to the selected viewing angle is displayed on the image display apparatus according to the second image.

For example, the above processes of the determination of the first pose and the second pose and the transformation of the first image to the second image may be completed by the image capturing side, or completed by the server side in responding to the image capturing side uploading the first pose and the first image to the server side.

For example, since the originally captured first pose (e.g., captured by the SLAM) has a deviation, which cannot ensure global consistency, the first pose may be optimized by a Structure from Motion (SfM) technology; and then the optimized first pose is transformed into a second pose (which may be referred to as a volumetric pose).

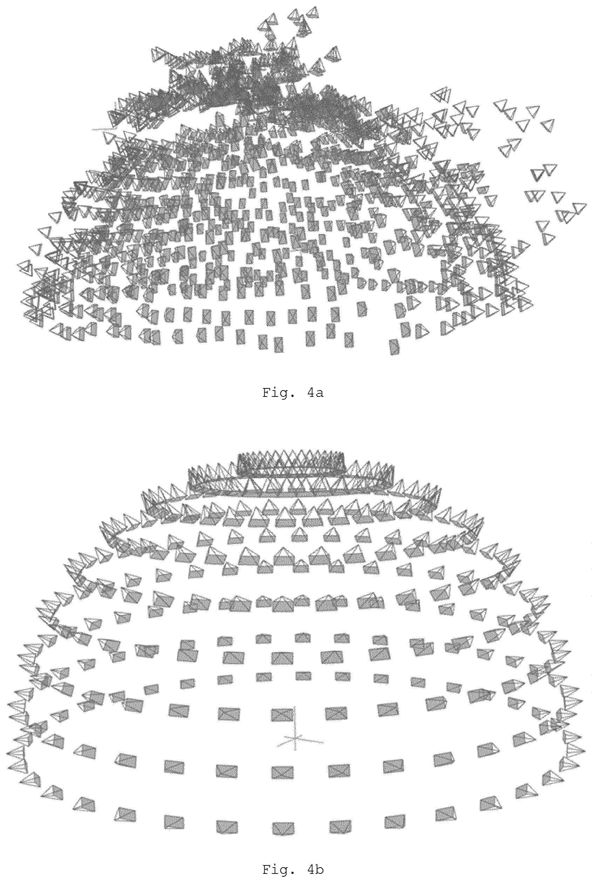

Figs. 4a-4b illustrate schematic diagrams of pose adjustment according to some embodiments of the present disclosure.

As shown in Fig. 4a, an orientation of a triangle in the figure characterizes the first pose when the first image is captured, and there are deviations in distance and angle between the first poses.

However, in the display of the image corresponding to each image capturing position, the deviation of the pose above is not introduced, resulting in non-uniform directions of the captured article in the images corresponding to different image capturing positions, for example, an upward orientation of a top of the captured article in some images, and an upward orientation of a bottom of the captured article in some images, and thereby resulting in incorrectness in the final three-dimensional information presentation.

As shown in Fig. 4b, an orientation of a triangle in the figure characterizes the second pose obtained by the adjustment. The second pose causes that the y-axis of the body coordinate system of the image capturing apparatus at the each image capturing position uniformly points to a same point (which can be a point on a z-axis of a body coordinate system of the article) in a direction away from the bottom of the three-dimensional area, and the z-axis uniformly points to the captured article.

According to a relationship between the first pose and the second pose corresponding to the same image capturing position, a transformation matrix between the images corresponding to the two poses may be calculated; and a perspective transformation processing is performed on the first image by using the transformation matrix to obtain the second image.

For each second image, it can be ensured that the captured article presented in the second image is located in a center of the image; and in response to the user adjusting the viewing angle, switching display on the second image corresponding to the viewing angle is performed, enabling rotation presentation of the three-dimensional information of the captured article, which has the same effect as rotating one real three-dimensional model.

In some embodiments, it is possible to perform saliency segmentation on the second image to eliminate a background part in the second image; perform encoding compression on the processed second image and then upload it to a server side; and issue data in response to the data being requested on a playing side.

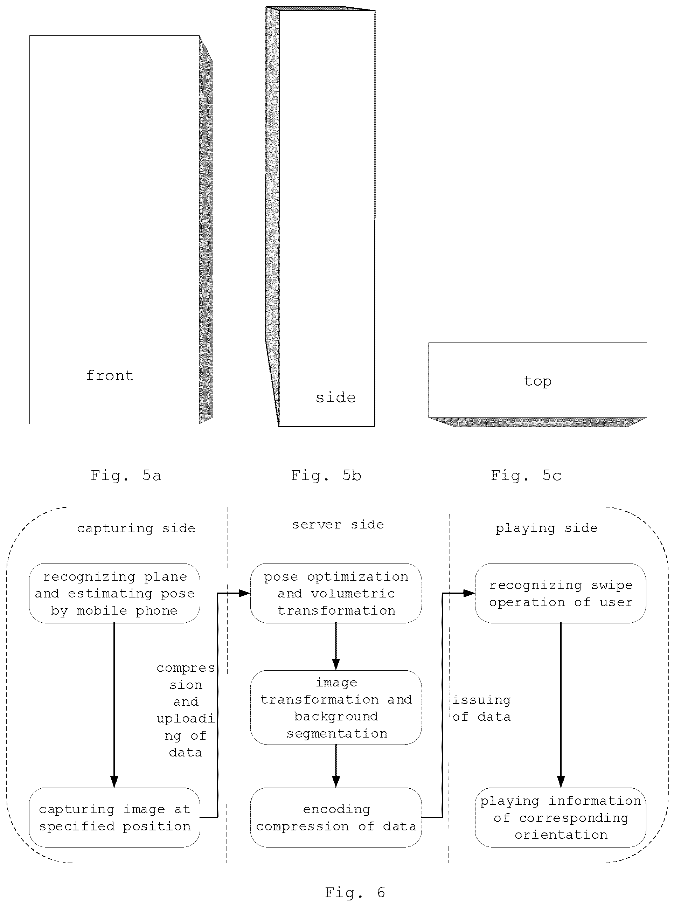

Figs. 5a-5c illustrate schematic diagrams of three-dimensional information presentation according to some embodiments of the present disclosure.

As shown in Figs. 5a-5c, in response to different viewing angles selected by the user, different images of the captured article are presented, respectively.

In some embodiments, related information of the plurality of first images is provided to the image display apparatus, to cause that the image display apparatus generates an image to be displayed according to related information of a first image for a designated image capturing position and related information of a first image for an adjacent image capturing position of the designated image capturing position, the designated image capturing position being determined according to the selected viewing angle.

For example, on the playing side, a data packet corresponding to the article is requested from the service side and downloaded; a viewing angle corresponding to an operation (e.g., swipe direction and distance, or zoom) of the user on a screen is recognized, and the viewing angle is converted into an image capturing position; second images of the image capturing position and a nearby image capturing position (e.g., adjacent image capturing position) in the data packet are decoded; and the second images are synthesized into an image for the image capturing position that the user needs to be presented, and the image is presented on the screen, thereby implementing three-dimensional information presentation of the article.

In this way, the images for the plurality of image capturing positions are synthesized, which can solve the technical problem of poor presentation effect caused by blurring, changes in light brightness, pose deviations and the like in the process of capturing the images.

Fig. 6 illustrates a schematic diagram of an image processing system according to some embodiments of the present disclosure.

As shown in Fig. 6, on an capturing side, a real-time pose of a camera (image capturing apparatus) is obtained by using a Slam system of a mobile terminal, such as ARKit. By a rendering identification (such as a bounding box and volumetric sphere), a user is guided to perform image capturing at a designated image capturing position. Plane recognition can be combined to ensure that the rendering identification and a shot object (captured article) are on a same plane.

Arrangement of the image capturing position can be divided into two types: capturing by longitude and latitude and uniform capturing. The capturing by longitude and latitude may be that one image capturing position is arranged every a certain angle in longitude and latitude directions of a volumetric hemisphere; and the uniform capturing is that a certain number of image capturing positions are uniformly arranged on a volumetric hemisphere, and a distance between the image capturing positions is equal. In this way, as much data information as possible can be captured by using as few image capturing positions as possible.

On the capturing side, it is possible to automatically focus according to a position of the captured object in a picture to ensure that the shot object is clear in the picture.

It is possible to automatically detect, by using the rendering identification such as a bounding box, whether the captured object exceeds a display range of the picture; on the capturing side, it is possible to calculate, according to the current pose of the camera, whether the camera approaches to the designated image capturing position; in a case where an capturing requirement (such as the captured article not exceeding the display range, the camera being located at the designated image capturing position, etc.) is met, on the capturing side, it is possible to automatically trigger storage for captured information to save the current captured information.

After the image capturing is completed, on the capturing side, it is possible to automatically package a captured first image and the first pose corresponding to the first image, camera intrinsics, bounding box and other related information and transmit them to a server side.

On the server side, the data packet uploaded by the capturing side is received, and the first image is stored and managed according to a serial number of the captured article; and on the server side, the captured original data (the first image and the first pose corresponding to the first image, etc.) is analyzed.

Since the originally captured first pose (e.g., captured by SLAM) has a deviation, which cannot ensure global consistency, the first pose may be optimized by an SfM technology; and then, the optimized first pose is transformed into a second pose.

It is possible to perform saliency segmentation on the second image to eliminate a background part in the second image; perform encoding compression on the processed second image and then upload it to the server side; and issue data in response to the data being requested on a playing side.

On the playing side, a data packet corresponding to the article is requested from the service side and downloaded; a viewing angle corresponding to an operation (e.g., swipe direction and distance, or zoom) of the user on a screen is recognized, and the viewing angle is converted into an image capturing position; second images of the image capturing position and a nearby image capturing position (i.e., within a preset range) in the data packet are decoded; and the second images are synthesized into an image for the image capturing position that the user needs to be presented, and the image is presented on the screen, thereby implementing three-dimensional information presentation of the article.

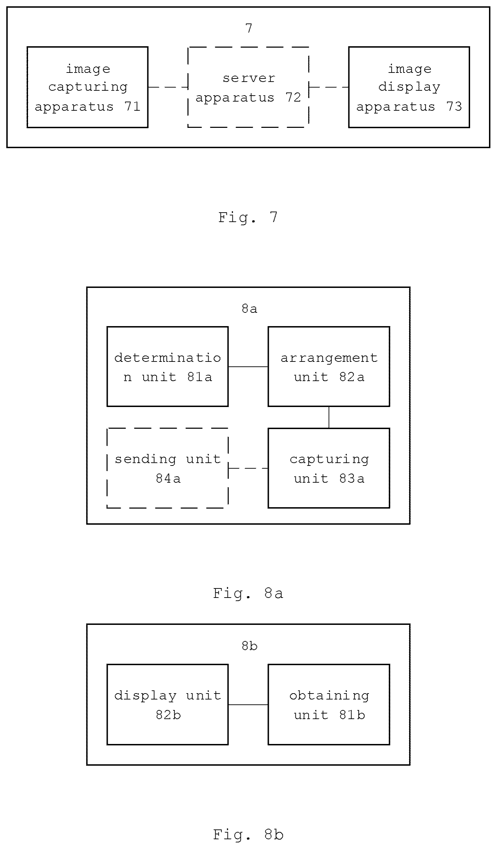

Fig. 7 illustrates a block diagram of an image processing system according to some embodiments of the present disclosure.

As shown in Fig. 7, the processing system 7 for an image includes: an image capturing apparatus 71 configured to perform the image processing method on the image capturing side in any of the above embodiments; and an image display apparatus 73 configured to, according to a plurality of first images provided by the first processing apparatus, perform the image processing method on the image display side in any of the above embodiments.

In some embodiments, the processing system 7 for an image further includes a server apparatus 72 configured to receive the plurality of first images uploaded by the image capturing apparatus, and send related information of the plurality of first images to the image display apparatus.

In some embodiments, the server apparatus 72 sends a second image to the image display apparatus 73; and the image display apparatus 73 displays an image corresponding to a selected viewing angle according to the second image.

Figs. 8a-8d illustrate block diagrams of an image processing apparatus according to some embodiments of the present disclosure.

As shown in Fig. 8a, a processing apparatus 8a for an image includes: a determination unit 81a configured to, according to a position of a captured article, determine a three-dimensional area, a whole or a part of the captured article being located inside the three-dimensional area; an arrangement unit 82a configured to arrange, on a surface of the three-dimensional area, a plurality of image capturing positions; and an capturing unit 83a configured to, at the each image capturing position, capture a first image of the captured article at a viewing angle for each image capturing position of the plurality of image capturing positions by using an image capturing apparatus, to obtain a plurality of first images of the captured article at different viewing angles, and cause that an image display apparatus displays, according to the plurality of first images, an image corresponding to a selected viewing angle.

In some embodiments, a distance between the each image capturing position of the plurality of image capturing positions and the captured article is equal.

In some embodiments, the three-dimensional area includes a hemispherical area, and the captured article includes a center of a bottom of the hemispherical area.

In some embodiments, the arrangement unit 82a arranges one image capturing position every preset longitude or preset latitude, by taking an initial position of the image capturing apparatus as a starting point.

In some embodiments, the arrangement unit 82a arranges one image capturing position every preset distance, by taking the initial position of the image capturing apparatus as the starting point.

In some embodiments, the determination unit 81a determines a pose of the image capturing apparatus when capturing the first image at the each image capturing position as a first pose; adjusts the first pose to determine a second pose of the image capturing apparatus at the each image capturing position, the second pose causing that a y-axis of a body coordinate system of the image capturing apparatus at the each image capturing position points to a same point in a direction away from a bottom of the three-dimensional area, and a z-axis points to the captured article; and performs a perspective transformation on the first image according to the first pose and the second pose to determine a second image, to cause that an image corresponding to the selected viewing angle is displayed on the image display apparatus according to the second image.

In some embodiments, the processing apparatus 8a for an image further includes: a sending unit 84a configured to provide related information of the plurality of first images to the image display apparatus, to cause that the image display apparatus generates an image to be displayed according to related information of a first image for a designated image capturing position and related information of a first image for an adjacent image capturing position of the designated image capturing position, the designated image capturing position being determined according to the selected viewing angle.

In some embodiments, the capturing unit 83a captures the plurality of first images at the plurality of image capturing positions according to a rendering identification, the rendering identification being kept on a same plane as the captured article by a plane recognition processing.

As shown in Fig. 8b, a processing apparatus 8b for an image includes: an obtaining unit 81b configured to obtain a viewing angle selected by a user; and a display unit 82b configured to display an image corresponding to the selected viewing angle according to a plurality of first images of a captured article corresponding to different viewing angles captured at a plurality of image capturing positions, the plurality of image capturing positions being located on a surface of a three-dimensional area, the three-dimensional area being determined according to a position of the captured article, and a whole or a part of the captured article being located inside the three-dimensional area.

In some embodiments, the display unit 82b generates an image to be displayed according to related information of a first image for a designated image capturing position and related information of a first image for an adjacent image capturing position of the designated image capturing position, the designated image capturing position being determined according to the selected viewing angle.

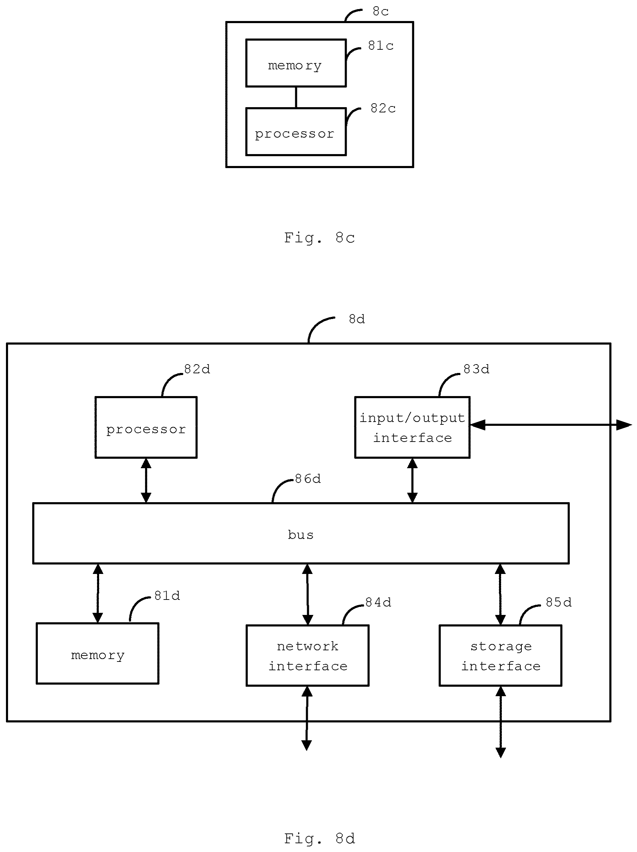

As shown in Fig. 8c, an image processing apparatus 8c of this embodiment includes: a memory 81c and a processor 82c coupled to the memory 81c, the processor 82c being configured to perform, based on instructions stored in the memory 81c, the image processing method in any of the embodiments of the present disclosure.

The memory 81c may include, for example, a system memory, fixed non-transitory storage medium, and the like. The system memory has thereon stored, for example, an operating system, application, boot loader, database, and other programs.

As shown in Fig. 8d, an image processing apparatus 8d of this embodiment includes: a memory 81d and a processor 82d coupled to the memory 81d, the processor 82d being configured to perform, based on instructions stored in the memory 81d, the image processing method in any of the above embodiments.

The memory 81d may include, for example, a system memory, fixed non-transitory storage medium, and the like. The system memory has thereon stored, for example, an operating system, application, boot loader, and other programs.

The image processing apparatus 8d may further include an input/output interface 83d, network interface 84d, storage interface 85d, and the like. These interfaces 83d, 84d, 85d as well as the memory 81d and the processor 82d may be connected, for example, by a bus 86d. The input/output interface 83d provides a connection interface for input/output devices such as a display, mouse, keyboard, touch screen, microphone, and sound box. The network interface 84d provides a connection interface for various networking devices. The storage interface 85d provides a connection interface for external storage devices such as an SD card and USB flash disk.

It should be appreciated by those skilled in the art that, the embodiments of the present disclosure may be provided as a method, system, or computer program product. Accordingly, the present disclosure may take a form of an entire hardware embodiment, an entire software embodiment, or an embodiment combining software and hardware aspects. Moreover, the present disclosure may take a form of a computer program product implemented on one or more computer-usable non-transitory storage media having computer-usable program code embodied therein, which include, but are not limited to, magnetic disk storage, CD-ROM, optical storage, etc.

So far, the image processing method, image processing apparatus, image processing system, and non-transitory computer-readable storage medium according to the present disclosure have been described in detail. Some details well known in the art have not been described in order to avoid obscuring the concepts of the present disclosure. Those skilled in the art can, according to the foregoing description, fully appreciate how to implement the technical solution disclosed herein.

The method and system of the present disclosure may be implemented in a number of ways. The method and system of the present disclosure may be implemented, for example, by software, hardware, firmware, or any combination of software, hardware, and firmware. The above order of the steps for the method is for illustration only, and the steps of the method of the present disclosure are not limited to the order specifically described above unless otherwise specifically stated. Furthermore, in some embodiments, the present disclosure may further be implemented as programs recorded in a recording medium, the programs including machine-readable instructions for implementing the method according to the present disclosure. Therefore, the present disclosure further covers a recording medium storing a program for performing the method according to the present disclosure.

While some specific embodiments of the present disclosure have been described in detail by examples, it should be understood by those skilled in the art that the above examples are for illustration only and are not intended to limit the scope of the present disclosure. Those skilled in the art should appreciate that modifications can be made to the above embodiments without departing from the scope and spirit of the present disclosure. The scope of the present disclosure is defined by the appended claims.

## Claims

1. An image processing method, comprising:
determining, according to a position of a captured article, a three-dimensional area, a whole or a part of the captured article being located inside the three-dimensional area;
arranging, on a surface of the three-dimensional area, a plurality of image capturing positions; and
capturing a first image of the captured article at a viewing angle for each image capturing position of the plurality of image capturing positions by using an image capturing apparatus at the each image capturing position, to obtain a plurality of first images of the captured article at different viewing angles, and cause that an image display apparatus displays, according to the plurality of first images, an image corresponding to a selected viewing angle.

2. The processing method according to claim 1, wherein a distance between the each image capturing position of the plurality of image capturing positions and the captured article is equal.

3. The processing method according to claim 2, wherein the three-dimensional area comprises a hemispherical area, and the captured article comprises a center of a bottom of the hemispherical area.

4. The processing method according to claim 3, wherein the arranging, on the surface of the three-dimensional area, the plurality of image capturing positions comprises:
arranging one image capturing position every preset longitude or preset latitude, by taking an initial position of the image capturing apparatus as a starting point.

5. The processing method according to any of claims 1 to 4, wherein the arranging, on the surface of the three-dimensional area, the plurality of image capturing positions comprises:
arranging one image capturing position every preset distance, by taking an initial position of the image capturing apparatus as a starting point.

6. The processing method according to any of claims 1 to 5, further comprising:
determining a pose of the image capturing apparatus when capturing the first image at the each image capturing position as a first pose;
adjusting the first pose to determine a second pose of the image capturing apparatus at the each image capturing position, the second pose causing that a y-axis of a body coordinate system of the image capturing apparatus at the each image capturing position points to a same point in a direction away from a bottom of the three-dimensional area, and a z-axis points to the captured article; and
performing a perspective transformation on the first image according to the first pose and the second pose to determine a second image, to cause that an image corresponding to the selected viewing angle is displayed on the image display apparatus according to the second image.

7. The processing method according to any of claims 1 to 5, further comprising:
providing related information of the plurality of first images to the image display apparatus, to cause that the image display apparatus generates an image to be displayed according to related information of a first image for a designated image capturing position and related information of a first image for an adjacent image capturing position of the designated image capturing position, the designated image capturing position being determined according to the selected viewing angle.

8. The processing method according to any of claims 1-5, wherein the capturing the first image of the captured article at the viewing angle for the each image capturing position of the plurality of image capturing positions comprises:
capturing the plurality of first images at the plurality of image capturing positions according to a rendering identification, the rendering identification being kept on a same plane as the captured article by a plane recognition processing.

9. An image processing method, comprising:
obtaining a viewing angle selected by a user;
displaying an image corresponding to the selected viewing angle according to a plurality of first images of a captured article corresponding to different viewing angles captured at a plurality of image capturing positions, the plurality of image capturing positions being located on a surface of a three-dimensional area, the three-dimensional area being determined according to a position of the captured article, and a whole or a part of the captured article being located inside the three-dimensional area.

10. The processing method according to claim 9, wherein the displaying the image corresponding to the selected viewing angle comprises:
generating an image to be displayed according to related information of a first image for a designated image capturing position and related information of a first image for an adjacent image capturing position of the designated image capturing position, the designated image capturing position being determined according to the selected viewing angle.

11. An image processing system, comprising:
an image capturing apparatus configured to perform an image processing method according to any of claims 1-8; and
an image display apparatus configured to, according to a plurality of first images provided by a first processing apparatus, perform an image processing method according to claim 9 or 10.

12. The processing system according to claim 11, further comprising:
a server apparatus configured to receive the plurality of first images uploaded by the image capturing apparatus and send related information of the plurality of first images to the image display apparatus.

13. The processing system according to claim 12, wherein
the server apparatus sends a second image to the image display apparatus; and
the image display apparatus displays, according to the second image, an image corresponding to a selected viewing angle.

14. An image processing apparatus, comprising:
a determination unit configured to, according to a position of a captured article, determine a three-dimensional area, a whole or a part of the captured article being located inside the three-dimensional area;
an arrangement unit configured to arrange, on a surface of the three-dimensional area, a plurality of image capturing positions; and
an capturing unit configured to, at the each image capturing position, capture a first image of the captured article at a viewing angle for each image capturing position of the plurality of image capturing positions by using an image capturing apparatus, to obtain a plurality of first images of the captured article at different viewing angles, and cause that an image display apparatus displays, according to the plurality of first images, an image corresponding to a selected viewing angle.

15. The processing apparatus according to claim 14, further comprising:
a sending unit configured to provide related information of the plurality of first images to the image display apparatus, to cause that the image display apparatus generates an image to be displayed according to related information of a first image for a designated image capturing position and related information of a first image for an adjacent image capturing position of the designated image capturing position, the designated image capturing position being determined according to the selected viewing angle.

16. An image processing apparatus, comprising:
an obtaining unit configured to obtain a viewing angle selected by a user; and
a display unit configured to display an image corresponding to the selected viewing angle according to a plurality of first images of a captured article corresponding to different viewing angles captured at a plurality of image capturing positions, the plurality of image capturing positions being located on a surface of a three-dimensional area, the three-dimensional area being determined according to a position of the captured article, and a whole or a part of the captured article being located inside the three-dimensional area.

17. An image processing apparatus, comprising:
a memory; and
a processor coupled to the memory, the processor being configured to perform, based on instructions stored in the memory, an image processing method according to any of claims 1-10.

18. A non-transitory computer-readable storage medium having thereon stored a computer program which, when executed by a processor, implements an image processing method according to any of claims 1-10.

19. A computer program, comprising:
instructions which, when executed by a processor, cause the processor to perform an image processing method according to any of claims 1-10.
